Europäisches Patentamt

(19) European Patent Office

Office européen des brevets

(11) Numéro de publication: **0 056 768
B1**

(12) **FASCICULE DE BREVET EUROPEEN**

(45) Date de publication du fascicule du brevet:
03.07.85

(21) Numéro de dépôt: **82400084.8**

(22) Date de dépôt: **18.01.82**

(51) Int. Cl.⁴: **G 01 V 3/12**

(54) Procédé d'illumination du sol et de calcul de la *constante diélectrique* et de la conductivité de celui-ci au moyen d'une impulsion électromagnétique et simulateur pour la mise en oeuvre de ce procédé.

(30) Priorité: **20.01.81 FR 8101019**

(43) Date de publication de la demande:
**28.07.82 Bulletin 82/30**

(45) Mention de la délivrance du brevet:
**03.07.85 Bulletin 85/27**

(84) Etats contractants désignés:
**AT BE CH DE GB IT LI NL SE**

(56) Documents cités:
**FR - A - 1 533 337
FR - A - 2 283 451
GB - A - 1 119 151
US - A - 2 455 941
US - A - 4 052 666**

(73) Titulaire: **SOCIETE NATIONALE INDUSTRIELLE
AEROSPATIALE Société dite:, 37 Boulevard de
Montmorency, F-75781 Paris Cedex 16 (FR)**

(72) Inventeur: **Rodiere, Charles, 17 Allée des Epines,
F-78160 Marly Le Roi (FR)**
Inventeur: **Crochet, Michel, 13 Allée des Chevreuils,
F-78480 Verneuil Sur Seine (FR)**

(74) Mandataire: **Rinuy, Guy et al, Cabinet Rinuy et
Santarelli 14, Avenue de la Grande Armée, F-75017 Paris
(FR)**

## Description

L'invention concerne un procédé d'illumination du sol au moyen d'une impulsion électromagnétique générée par un simulateur aérien couplé au sol, et de calcul de la constante diélectrique et de la conductivité de celui-ci à partir de cette impulsion. Elle concerne également le simulateur couplé au sol pour la mise en œuvre de ce procédé.

Les conditions d'illumination d'objets à la surface du sol ou en profondeur par une impulsion de champ électromagnétique, peuvent être recherchées dans le domaine de la protection civile par exemple.

De même, la connaissance des valeurs de la conductivité et de la permittivité diélectrique d'un sol, d'après des mesures de réflectrométrie électromagnétique résultant d'une illumination, peut être recherchée dans le domaine géologique qui requiert habituellement des moyens importants tels que des forages à plus ou moins grande profondeur.

On connaît d'ailleurs, à cet effet, des procédés permettant de déterminer des caractéristiques et notamment la constante diélectrique et/ou la conductivité électrique de formations de terrains traversées par un sondage et qui impliquent des moyens pour émettre de l'énergie électromagnétique en un premier emplacement du sondage, d'autres moyens étant prévus pour détecter un premier paramètre, de préférence l'atténuation relative de l'énergie électromagnétique, en un second emplacement dudit sondage.

De tels moyens requièrent malheureusement un sondage, une sonde disposée dans le sondage, sur la sonde un générateur d'onde sinusoïdale, et au moins un récepteur éloigné permettant de mesurer l'atténuation relative de l'énergie de l'onde électromagnétique sinusoïdale ou bien son déphasage, ce qui rend assez complexe l'opération de mesure.

De plus, comme l'onde est sinusoïdale à une fréquence bien déterminée, les renseignements obtenus concernent le comportement du sol uniquement à cette fréquence, et l'interprétation possible des résultats est assez limitée.

On connaît, en variante, d'après le document FR-A 2 283 451 notamment, un procédé (et un appareil) de reconnaissance géophysique selon lequel on émet une onde de très basse fréquence à fréquence unique à partir d'un émetteur lointain pour que les surfaces d'ondes soient pratiquement planes, et on compare les amplitudes, ainsi que les phases des champs électromagnétiques résultants mesurés en surface et à une profondeur prédéterminée dans un forage. Ce procédé nécessite un émetteur et deux capteurs, et les renseignements obtenus ne sont valables que pour la fréquence utilisée.

On connaît aussi, d'après le document GB-A 1 119 151, un procédé (et un appareil) pour l'exploration d'un sol à l'aide d'ondes électromagnétiques, mais celles-ci sont de très haute fréquence et ce procédé ne se préoccupe pas des caractéristiques du sol, mais vise à détecter des objets enterrés présentant une constante différente de celle dudit sol. Ce procédé fait intervenir une source et deux capteurs solidaires les uns des autres, et mobiles dans leur ensemble à la surface du sol; la détection d'un objet résulte des déséquilibres temporaires qu'il induit entre les signaux recueillis par les capteurs.

Le procédé selon l'invention, qui va être décrit dans la suite du texte, va montrer comment peuvent être obtenues des mesures permettant simplement de calculer des valeurs T et E correspondant respectivement à la conductivité et à la permittivité ou constante diélectrique du sol, à son voisinage ou bien dans celui-ci même, avec une grande richesse d'investigation.

De même sera décrit le simulateur et ses moyens de mesure, propres à mettre en œuvre un tel procédé.

Ainsi, en vue de remédier aux inconvénients qui ont été exposés et afin d'obtenir une plus grande richesse de résultats, l'invention concerne un procédé d'illumination d'un sol par rayonnement électromagnétique en vue de la détermination de la constante diélectrique et de la conductivité de ce sol, selon lequel on émet vers la surface du sol, à partir d'un simulateur aérien de type cornet, un rayonnement électromagnétique de caractéristiques déterminées et on détecte en un point du volume illuminé le champ électromagnétique résultant, caractérisé en ce que l'on émet à partir du simulateur aérien, maintenu fixe, ledit rayonnement sous la forme d'une impulsion électromagnétique en en relevant une grandeur caractéristique de son amplitude, on guide cette impulsion électromagnétique jusqu'à une profondeur prédéterminée dans le sol, on relève l'évolution au cours du temps, audit point du volume air-sol illuminé, d'une grandeur représentative de l'amplitude du champ électromagnétique local, et on détermine la constante diélectrique et la conductivité du sol par comparaison des grandeurs représentatives des amplitudes de l'impulsion et du champ électromagnétique résultant, compte tenu de la position dudit point de mesure par rapport à la surface du sol.

L'invention concerne également un simulateur aérien adapté à la détermination de la constante diélectrique et de la conductivité d'un sol du type comportant une source de rayonnement électromagnétique, un capteur de champ électromagnétique et un dispositif de mesure associé audit capteur, caractérisé en ce qu'il comporte un générateur d'impulsions électriques, un connecteur d'entrée relié audit générateur, une pluralité de nappes conductrices dirigées vers le sol et reliées au connecteur d'entrée en sorte de former un cornet, fixe par rapport au sol, pour émettre vers la surface du sol, sous un angle d'incidence donné, des impulsions électromagnétiques, une structure enterrée prolongeant dans le sol lesdites nappes pour guider ces impulsions électromagnétiques jusqu'a une profondeur prédéterminée, le capteur de champ électromagnétique étant adapté à être disposé dans le volume complexe air-sol défini par ces nappes et cette structure enterrée pour relever un signal représentatif de l'amplitude du champ électromagnétique résultant en un point prédéterminé dudit volume complexe air-sol illuminé, et des dispositifs de mesure reliés audit connecteur d'entrée et audit capteur, respectivement.

D'autres avantages de l'invention ressortiront d'ailleurs de la description qui va suivre en référence aux dessins annexés se rapportant à des modes et des formes de réalisation préférentiels donnés à titre d'exemples non limitatifs, dans lesquels:

- les figures 1 et 2 montrent la décomposition d'une onde frappant le sol, selon les deux polarisations élémentaires respectivement horizontale et verticale, dans un système de référence donné;
- les figures 3 et 4 montrent la décomposition des champs incidents et réfléchis correspondant à une onde frappant le sol, conformément respectivement aux figures 1 et 2;
- la figure 5 montre la différence de marche en un point entre un rayon incident et un rayon réfléchi provenant de la réflexion d'un rayon incident parallèle au premier;
- les figures 6 et 7 schématisent la propagation d'ondes respectivement plane et sphérique en espace libre;
- les figures 8 et 9 schématisent la propagation d'ondes sphériques avec un simulateur respectivement de longueur infinie et de longueur finie selon l'invention;
- la figure 10 schématise un simulateur selon l'invention en contact avec le sol où une onde est guidée même à l'intérieur de celui-ci;
- la figure 11 montre l'évolution du champ en fonction du temps dans un simulateur à ondes guidées à nappes de longueur finie;
- la figure 12 montre un simulateur selon l'invention;
- la figure 13 montre l'ensemble de l'installation permettant la mise en œuvre du procédé selon l'invention;
- les figures 14A à 14F montrent les courbes en fonction du temps des champs incident, réfléchi et total au sol, respectivement électrique et magnétique;
- les figures 15A et 15B sont des vues de côté, dans des directions perpendiculaires, d'une forme de réalisation à axe vertical, d'un simulateur selon l'invention;
- les figures 16 et 17 montrent des détails de deux schémas respectifs d'exploitation d'un simulateur selon l'invention;
- les figures 18A et 18B sont des vues de côté, dans des directions perpendiculaires, d'une forme de réalisation à axe incliné, d'un simulateur selon l'invention;
- les figures 19A à 19D montrent quatre conditions d'essai d'un simulateur selon l'invention;
- les figures 20A et 20D montrent les oscillogrammes obtenus pour une composante du champ magnétique, respectivement dans les quatre conditions d'essai montrées sur les figures 19A à 19D;
- la figure 21 montre des courbes champ électrique transmis/champ électrique incident en fonction de la profondeur pour différentes valeurs de la conductivité et de la constante diélectrique du sol.

D'une manière générale, lorsque le sol est illuminé par une onde électromagnétique plane arrivant sous l'incidence $\psi$, l'onde incidente est caractérisée par son champ électrique $\vec{E}$ et son champ magnétique $\vec{H}$, perpendiculaires, en phase, et dans le rapport

$$\frac{E}{H} = 120\,\pi\,(\Omega).$$

On suppose le sol de conductivité uniforme $\sigma$, de constante diélectrique relative $\varepsilon_r$, de perméabilité magnétique $\mu_o$, et d'extension infinie selon les directions Oy et Oz (en surface), et Ox (en profondeur).

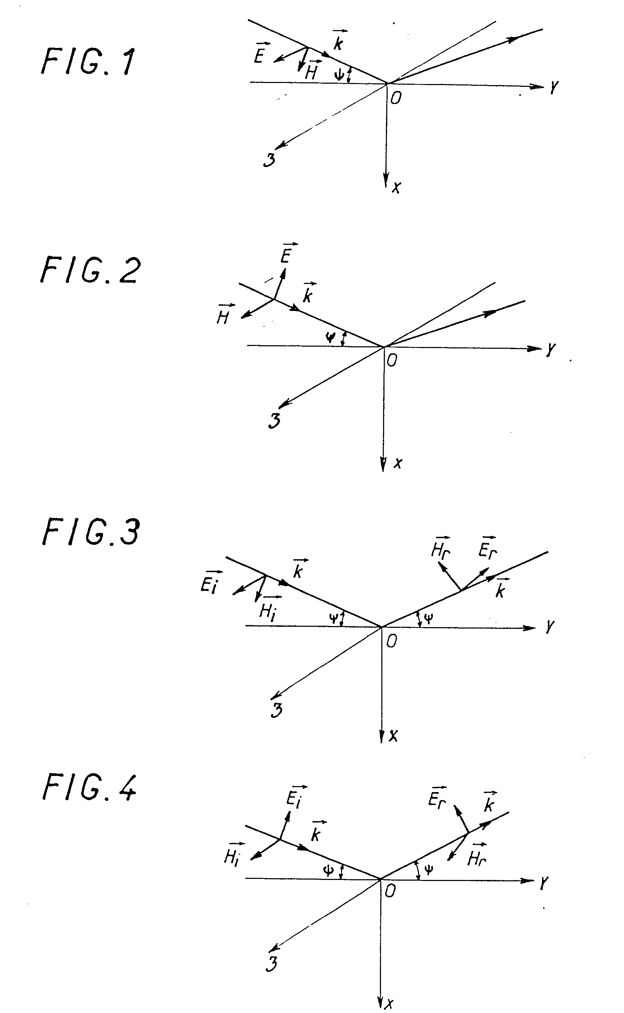

Il est toujours possible de décomposer l'onde incidente selon les deux polarisations élementaires
- horizontale, champ électrique parallèle au sol (figure 1),
- verticale, champ électrique contenu dans le plan d'incidence – champ magnétique horizontal (figure 2).

Il est connu que la discontinuité du milieu constitué par le sol ($\varepsilon = \varepsilon_o \cdot \varepsilon_r, \sigma$), par rapport à l'air ($\varepsilon = \varepsilon_o$, $\sigma = O$) impose le respect des conditions aux limites pour les ondes se propageant dans les deux milieux.

La continuité des composantes tangentielles de E et H entraîne donc l'existence, dans l'air, d'une onde réfléchie plane, dont le vecteur de propagation $\vec{k}$ fait avec l'axe Oy le même angle $\psi$ que l'onde incidente.

En tout point de la surface du sol, le champ réfléchi $E_r$ est de même relié au champ incident $E_i$ et à la pulsation $\omega$ par la relation:
$E_r e^{j\omega t} = R \cdot E_i e^{j\omega t}$ (en amplitude et en phase) (figures 3 et 4).

R présente alors les deux formes $R_h$, $R_V$ suivantes, correspondant respectivement à la polarisation horizontale et à la polarisation verticale:

$$R_h = \frac{\sin\psi - \sqrt{\varepsilon_r(1 - j\dfrac{\sigma}{\omega \cdot \varepsilon_o \cdot \varepsilon_r}) - \cos^2\psi}}{\sin\psi + \sqrt{\varepsilon_r(1 - j\dfrac{\sigma}{\omega \cdot \varepsilon_o \cdot \varepsilon_r}) - \cos^2\psi}}$$

$$R_v = \frac{\varepsilon_r(I - j \frac{\sigma}{\omega . \varepsilon_o . \varepsilon_r}) \sin \psi - \sqrt{\varepsilon_r(I - j \frac{\sigma}{\omega . \varepsilon_o . \varepsilon_r}) - \cos^2 \psi}}{\varepsilon_r(I - j \frac{\sigma}{\omega . \varepsilon_o . \varepsilon_r}) \sin \psi + \sqrt{\varepsilon_r(I - j \frac{\sigma}{\omega . \varepsilon_o . \varepsilon_r}) - \cos^2 \psi}}$$

Il doit être noté que la quantité $\varepsilon_r (I - j \frac{\sigma}{\omega . \varepsilon_o . \varepsilon_r})$,

souvent désignée par le terme «constante diélectriqe complexe» du sol, se rencontre parfois dans la littérature sous la forme

$$\varepsilon_r(I + j \frac{\sigma}{\omega . \varepsilon_o . \varepsilon_r}).$$

Le signe – doit être associé à des champs de la forme E $e^{+j\omega t}$, et le signe + à des champs de la forme E $e^{-j\omega t}$.

Les champs résultants au niveau du sol sont la somme vectorielle du champ incident et du champ réfléchi.

En polarisation horizontale (figure 3); les trièdres $\vec{E}$, $\vec{H}$, $\vec{k}$ devant être de sens direct, on aura d'après la définition de $R_h$:

– un champ électrique total tangentiel
$E_t = E_i(1 + R_h)$
– un champ magnétique total tangentiel
$H_t = H_i(1 - R_h) \sin \psi$

– un champ magnétique total normal
$H_n = H_i(1 + R_h) \cos\psi$
et en polarisation verticale (figure 4), on aura:
– un champ électrique total normal
$E_n = E_i(1 + R_v) \cos \psi$
– un champ électrique total tangentiel
$E_t = E_i(1 - R_v) \sin \psi$
– un champ magnétique total tangentiel
$H_t = H_i(1 + R_v)$

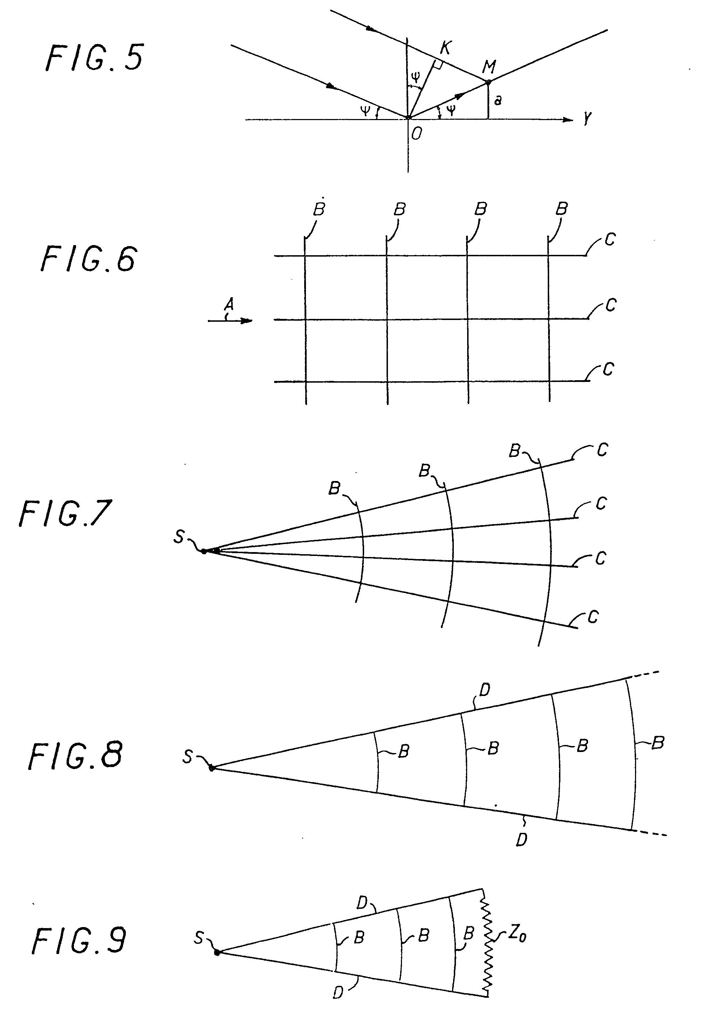

En tout point situé au-dessus du sol à une altitude a, les champs incident et réfléchi interfèrent de la même façon que précédemment, avec toutefois un retard dû à la différence de trajet entre le rayon direct et le rayon réfléchi parvenant en ce point, comme représenté sur la figure 5 où l'on voit qu'au point M, la différence de marche entre les rayons direct et réfléchi est égale à OM – KM soit:

$$OM = \frac{a}{\sin \psi},$$

$$KM = OM \sin(\frac{\pi}{2} - 2\psi) = OM \cos 2\psi = \frac{a}{\sin \psi} \cos 2\psi,$$
d'ou
$$OM - KM = \frac{a}{\sin \psi}(1 - \cos 2\psi) = 2 a \sin \psi.$$

Le retard entre les deux ondes est donc
$$\frac{2 a \sin \psi}{C}.$$

C étant la vitesse de propagation de la lumière dans le vide.

Il suffira donc de reprendre les formules de composition des champs établies plus haut, en affectant les coefficients $R_v$ ou $R_h$ de la quantité

$$\Delta = e^{j\omega \frac{2 a \sin \psi}{C}},$$

à la pulsation $\omega$.

Les champs totaux prendront alors la forme

$$E, H = E_i, H_i(1 \pm R e^{j\Delta}),$$

et le retard $\Delta$ se traduira:
– pour une onde entretenue de pulsation $\omega$, par un déphasage supplémentaire entre onde incidente et onde réfléchie,
– pour une onde impulsionnelle E (t) ou H (t), par un délai entre l'arrivée de l'onde incidente et de l'onde réfléchie.

La réflexion à la surface du sol s'accompagne de la transmission d'une onde dans le sol. Cette onde se propage selon les deux directions $O_x$ et $O_y$, avec des caractéristiques différentes, soit

$$\left. \begin{array}{c} E(x, y) \\ ou \\ H(x, y) \end{array} \right\} = \left\{ \begin{array}{c} E(x = 0, y = 0) \\ ou \\ H(x = 0, y = 0) \end{array} \right. e^{j(\omega t - k_x x - k_y y)},$$

où le nombre complexe $e^{j(\omega t - k_x x - k_y y)}$ peut être défini comme un rapport de transmission T, les vecteurs d'onde $k_x$ et $k_y$ étant définis par

$$k_x = \omega \sqrt{\varepsilon_o . \mu_o} \cdot \sqrt{\varepsilon_r(I - j \frac{\sigma}{\omega . \varepsilon_o . \varepsilon_r}) - \cos^2 \psi} \text{ et}$$

$$k_y = \omega \sqrt{\varepsilon_o . \mu_o} \cdot - \cos \psi.$$

$$\text{soit } T = e^{j(\omega t - k_x X - k_y Y)}$$

Il y a donc atténuation de l'onde selon la direction $O_x$. Si l'on s'intéresse à la seule propagation selon $O_x$, on pourra écrire

$$\left. \begin{array}{c} E\,(x) \\ H\,(x) \end{array} \right\} = \left\{ \begin{array}{c} E\,(x=0) \\ H\,(x=0) \end{array} \right. \quad e^{j\,\left(\omega\,t\,-\,\frac{\omega}{C}\,x\,\sqrt{\varepsilon_r\left(I-j\,\frac{\sigma}{\omega\,.\,\varepsilon_o\,.\,\varepsilon_r}\right)-\cos^2\psi}\,\right)}$$

Les champs $E\,(x=0)$ et $H\,(x=0)$ ont été obtenus plus haut comme les sommes algébriques des champs incident et réfléchi à la surface de séparation.

On notera que les champs E et H (tant en surface qu'en profondeur) ne sont plus en phase, ni dans le rapport $Z_o = 120\pi$; mais au contraire si l'on s'intéresse aux composantes tangentielles

$$\frac{E_t}{H_t}$$

tant en polarisation horizontale que verticale on obtiendra:
en polarisation horizontale

$$\frac{E_t}{H_t} = \frac{E_i}{H_i}\,\frac{(I+R_h)}{(I-R_h)\,\sin\psi} = Z_o\,\frac{1}{\sqrt{\varepsilon_r\,(I-j\,\frac{\sigma}{\omega\,.\,\varepsilon_o\,.\,\varepsilon_r})}}\,,$$

et en polarisation verticale

$$\frac{E_t}{H_t} = \frac{E_i}{H_i}\,\frac{(I-R_v)\,\sin\psi}{(I+R_v)} = Z_o\,\frac{1}{\sqrt{\varepsilon_r\,(I-j\,\frac{\sigma}{\omega\,.\,\varepsilon_r\,.\,\varepsilon_o})}}\,,$$

Les champs $E_t$ et $H_t$ sont donc dans le rapport

$$Z = Z_o\,\frac{1}{\sqrt{\varepsilon_r\,(I=j\,\frac{\sigma}{\omega\,.\,\varepsilon_o\,.\,\varepsilon_r})}}$$

représentant l'impédance du milieu constitué par le sol, et on a en polarisation horizontale:
$E_t = E_i\,(1+R_h)\,.\,T,$

$H_t = H_i\,(1-R_h)\,\sin\psi\,.\,T,$
$H_n = H_i\,(1+R_h)\,\cos\psi\,.\,T;$
et en polarisation verticale:

$E_n = E_i\,(1+R_v)\,\cos\psi\,.\,T,$
$E_t = E_i\,(1-R_v)\,\sin\psi\,.\,T,$
$H_t = H_i\,(1+R_v)\,.\,T.$
La forme des expressions $R_v$ et $R_h$ montre que deux cas asymptotiques peuvent être envisagés:

$$\text{pour}\ \omega \gg \frac{\sigma}{\varepsilon_o\,.\,\varepsilon_r}\ (\text{hautes fréquences}), \quad \frac{\sigma}{\omega\,.\,\varepsilon_o\,.\,\varepsilon_r}\ \longrightarrow\ 0,$$

et $R_v$ et $R_h$ ne dépendent plus que de $\psi$ et $\varepsilon_r$; le sol se comporte comme un diélectrique;

$$\text{en particulier si}\ \psi = \frac{\pi}{2}, \quad R_v = R_h = \frac{1-\sqrt{\varepsilon_r}}{1+\sqrt{\varepsilon_r}}\,,$$

$$\text{pour}\ \omega \ll \frac{\sigma}{\varepsilon_o\,.\,\varepsilon_r}\ (\text{basses fréquences}), \quad \frac{\sigma}{\omega\,.\,\varepsilon_o\,.\,\varepsilon_r}\ \longrightarrow\ \infty\,,$$

$$\text{et}\ R_h \longrightarrow -1\ ;$$

le sol se comporte comme un milieu parfaitement métallique.

Des courbes types telles que $R_v = f\,(\omega)$ et $R_h = f\,(\omega)$ peuvent être tracées pour différentes valeurs de l'angle d'incidence, et telles que $R_v = f\,(\psi)$ et $R_h = f\,(\psi)$ pour différentes valeurs de la fréquence ou de la pulsation, et cela pour des valeurs données de la constante diélectrique $\varepsilon_r$ et de la conductivité $\sigma$.

Il est également possible de tracer des courbes types telles que celle du rapport entre le champ incident et le champ total au point de mesure dans le cas de mesures par réflexion, ou celle du rapport champ transmis/champ incident en fonction de la profondeur dans le cas d'une mesure par transmission, pour différentes valeurs de $\varepsilon_r$, $\sigma$, $\psi$, $\omega$, etc.

Il est enfin possible de calculer, pour des valeurs $\varepsilon_r$, $\sigma$ et $\psi$ données a priori, des courbes types montrant la forme temporelle des champs électrique ou magnétique au dessus du sol ou dans celui-ci, pour une forme de champ incident déterminé.

De telles courbes types étant calculées, il est possible de s'en servir en vue d'identifier une onde relevée et de calculer la constante diélectrique et la conductivité.

Il est à noter que les phénomènes de réflexion sont fondamentalement différents selon que l'onde est à polarisation horizontale ou verticale.

Sur le plan pratique, le problème peut être posé en considérant que l'on désire, pour simuler une onde plane, réaliser une illumination électromagnétique d'un sol quelconque au moyen d'un simulateur à «ondes guidées» afin de déterminer:

- les caractéristiques de l'onde locale au voisinage du sol (dans l'air ou dans le sol),
- les caractéristiques du sol ($\varepsilon_r$, $\sigma$), déduites des phénomènes locaux.

Il est possible de mettre en œuvre un simulateur conforme à l'invention, sur lequel les phénomènes sont aisés à interpréter.

On peut se représenter un tel simulateur à ondes guidées, en imaginant deux surfaces équipotentielles métallisées accompagnant une onde plane ou sphérique rayonnée en espace libre.

Les conditions aux limites étant respectées, les phénomènes physiques restent ce qu'ils étaient.

Afin de limiter la dimension longitudinale d'un tel simulateur, on referme, à une distance finie de la source, les deux nappes métallisées par une impédance adaptée, de sorte qu'aucune réflexion ne vienne interférer avec l'onde incidente, ce qui conduit aux différents cas représentés sur les figures 6 à 9.

Ainsi, dans le cas idéal d'une onde plane se propageant en espace libre (figure 6), la direction de propagation étant représentée par la flèche A, en section, les fronts d'onde B sont des droites perpendiculaires à la direction A, e les lignes équipotentielles C sont des droites les coupant normalement.

Dans le cas idéal d'une onde sphérique se propageant en espace libre (figure 7), à partir d'une source S, en section, les fronts d'onde B sont des circonférences centrées sur la source S, et les lignes équipotentielles des demi-droites C les coupant normalement.

Dans le cas dérivé avec un simulateur à onde sphérique guidée de longueur infinie, dans lequel la zone de propagation est limitée par des nappes métallisées D représentées en section par des demi-droites (figure 8), les fronts d'onde B sont représentés par des arcs de circonférence centrés sur la source S.

Dans un autre cas dérivé, avec un simulateur à onde sphérique guidée de longueur finie, dans lequel la zone de propagation est limitée par des nappes métallisées D de longueur finie reliées à l'opposé dela source par une impédance de charge Z, par exemple l'impédance caractéristique $Z_0$ (figure 9), les fronts d'onde B sont également représentés par des arcs de circonférence centrés sur la source S.

Supposons qu'une onde plane ou sphérique frappe le sol (sous incidence normale pour simplifier le problème).

L'onde qui se propageait dans l'air avec l'impédance du vide ($Z_0 = 120\pi$-$\Omega$) rencontre un milieu d'impédance plus faible Z telle que:

$$Z = \frac{Z_0}{\sqrt{\varepsilon_r\left(1 - j\ \dfrac{\sigma}{\omega . \varepsilon_0 . \varepsilon_r}\right)}}$$

Si l'on se reporte au paragraphe précédent, il apparaît que l'on peut simuler l'onde incidente au moyen d'un simulateur à onde guidée de longueur infinie.

Le milieu complexe constitué par le sol remplira l'espace inter électrodes depuis un plan d'abscisse x = h jusqu'à l'infini.

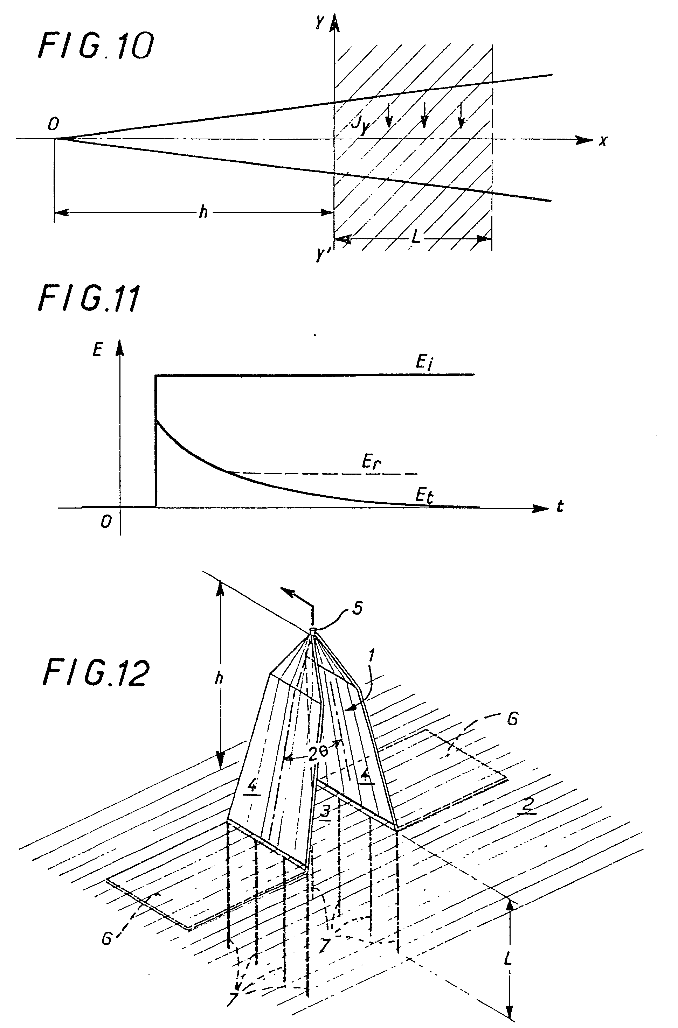

Dans la réalité, il en va évidemment différemment, et la longueur des nappes pénétrant dans le sol est obligatoirement finie. Il en résultera une différence entre la simulation et la réalité, différence qui doit être chiffrée. Considérons à cet effet deux cas asymptotiques, en raisonnant sur la base de la représentation en section de la figure 10. Sur cette figure, la source est placée en un point O éloigné du sol d'une distance h, et les nappes métallisées D s'enfoncent dans le sol à une profondeur L; les axes de référence sont Ox (bissectrice de l'angle délimité par les nappes métallisées) et y'y (ligne de sol) et les courants engendrés dans le sol sont notés $J_y$.

En hautes fréquences, les courants $J_y$ induits dans le sol par les champs électrique ou magnétique en surface s'affaiblissent exponentiellement selon la direction Ox. Tant que la profondeur L des nappes à l'intérieur du sol est nettement plus élevée que la profondeur de pénétration de ces courants, les courants Jy (pour x = h + L) en extrémité des nappes conductrices sont très faibles; le fait d'interrompre ces nappes à l'abscisse x = L + h ne présente donc pas d'influence notable.

Il faut noter que la profondeur de pénétration $\delta$ dépend de la fréquence

$$\left(\delta = \frac{1}{\sqrt{\pi . \mu_0 . f . \sigma}}\right)$$

et que si l'excitation est impulsionnelle, les phénomènes seront correctement rendus pour la partie du spectre telle que $\delta \ll L$.

La profondeur de pénétration augmente quand la fréquence décroît. L'impédance comprise entre les deux nappes diminue donc en conséquence. Si l'on arrête les nappes à une profondeur L, les phénomènes seront faussés lorsque $\delta \approx L$. En d'autres termes, lorsque la fréquence tend vers O, l'impédance du sol vue entre les nappes devrait normalement tendre vers O; avec des nappes tronquées, elle tendra vers la quantité:

$$R = \frac{1}{\sigma} \cdot \frac{1}{LW},$$

avec

1 = distance entre nappes
W = largeur des nappes
L = profondeur des nappes.

On peut donc prévoir que, avec un simulateur à ondes guidées à nappes de longueur finie, les effets à long terme ne seront pas correctement rendus et qu'en particulier le champ tangentiel au voisinage du sol sera plus important que ne le laisse supposer la théorie. Ce fait est représenté sur la figure 11 montrant l'évolution du champ en fonction du temps, où, en réponse à un échelon de champ incident $E_i$, et après une croissance rapide, le champ total obtenu $E_r$ décroît bien, mais sans atteindre la faible valeur du champ théorique $E_t$. Seul, l'allongement de la partie enterrée des nappes métalliques pourrait améliorer ce point tel que montré à titre d'exemple sur la figure 11.

Il faut noter que grâce au fait que l'on utilise une impulsion, et non un train d'onde à fréquence unique, on obtient une grande largeur de spectre s'étendant aussi bas que l'on veut vers les basses fréquences, et pouvant atteindre plusieurs dizaines de mégahertz, en fonction des caractéristiques de l'impulsion choisie. Il en résulte une très grande richesse de résultats, des possibilités d'investigation dans un grand nombre de directions, et la faculté de faire des recoupements de résultats fort intéressants, contrairement aux cas connus ou les essais d'un type voisin donnent des résultats extrêment limités, et demandent donc un très grand nombre de mesures à des fréquences différentes avec des matériels à chaque fois différents parce que devant être adaptés à la fréquence de l'onde sinusoïdale servant aux investigations.

Le simulateur aérien 1, conforme à l'invention, qui est représenté schématiquement sur la figure 12, est placé verticalement sur la surface du sol 2. Ce simulateur comporte une zone de propagation 3 limitée par deux nappes métalliques ou métallisées 4, par exemple deux nappes de fils conducteurs, délimitant un dièdre d'angle 2 θ ; ces deux nappes 4 formant cornet sont reliées au sommet du dièdre par un connecteur d'entrée 5, raccordé à un générateur d'onde électromagnétique approprié (non représenté), les impédances étant adaptées. Le couplage avec le sol est assuré, à l'opposé du sommet du dièdre, par une structure enterrée, par exemple par deux nappes 6 grillagées métalliques conductrices horizontales (ou treillages) enfoncées dans le sol ici à faible profondeur, par des nappes ou des pieux 7 de longueur L enfoncés verticalement dans le terrain, avec des espacements ou des profondeurs d'enfoncement déterminés, ou encore par une combinaison de ces deux configurations, comme sur la figure 12; ainsi les nappes (ici au nombre de deux), définissent au sol un polygone (ici un carré) à l'extérieur duquel peuvent s'étendre les nappes grillagées enfoncées dans le sol.

L'excitation du simulateur cornet 1 qui vient d'être décrit peut être obtenue par un générateur d'impulsions appropriées, d'impédance 50 Ω relié au simulateur par un câble d'impédance environ 50 Ω. Pour éviter des réflexions intempestives, une adaptation résistive bidirectionnelle 50 Ω /120 Ω est réalisée au niveau du connecteur d'entrée du simulateur.

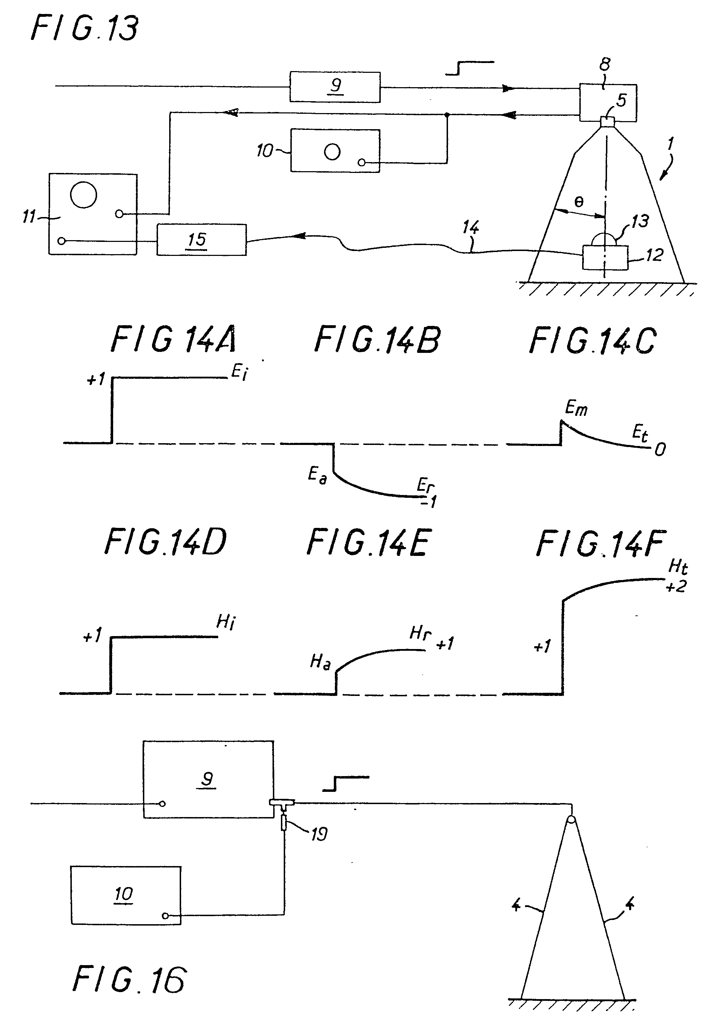

La figure 13 montre un schéma de montage avec lequel le champ réfléchi sur le sol est absorbé par un adaptateur d'impédance du cornet et ne vient pas fausser le signal observé.

Le simulateur 1 de demi-angle au sommet θ et d'impédance $Z_c$ ici égale à 120 Ω est muni à son sommet (à son connecteur d'entrée 5), d'un adaptateur 50 Ω /120 Ω référencé 8 relié par une ligne au générateur 9 lui-même relié par une ligne à un dispositif de commande non représenté; l'adaptateur 8 est également relié à des dispositifs de mesure, en particulier d'une part à un oscilloscope 10 de contrôle du signal par exemple en échelon qui lui est appliqué, et, d'autre part, à un oscilloscope 11 de mesure afin de le synchroniser. Sur le sol 2, dans la zone d'illumination, repose un support 12 pour un capteur optique 13 destiné à mesurer une grandeur représentative du champ électrique ou magnétique réfléchi par le sol. Le capteur 13 est relié par un câble de fibres optiques 14 à un récepteur 15 jouant le rôle de transducteur opto-électronique dont la sortie attaque par un câble électrique l'entrée de l'oscilloscope 11 synchronisé par le signal d'entrée.

Avec un tel montage, le champ réfléchi sur le sol est absorbé par l'adaptateur d'impédance et ne vient pas fausser le signal observé.

Le capteur 13 est positionné ici au bas du simulateur, au ras du sol, et on observe simplement le champ local tangentiel au niveau du sol; il peut également être en haut du simulateur, l'antenne d'émission servant alors également à la réception; on peut alors observer l'impulsion de champ incident qui est réfléchi sur le sol et revient au capteur après un retard de quelques nanosecondes.

Le capteur utilisé est de type «asymétrique». Son électrode de référence est fixée sur la paroi du simulateur et en continuité électrique avec elle.

L'impulsion de champ créée est de forme rectangulaire, de temps de montée de l'ordre de quelques nanosecondes. Sa largeur est réglée à quelques microsecondes, ce qui, compte tenu de la vitesse d'observation à l'oscilloscope ($10 \times 50$ ou $10 \times 100$ ns) peut l'apparenter à un échelon de durée infinie. Il s'agit donc bien d'une impulsion au sens électronique du terme et non d'un train d'ondes sinusoïdal par exemple en UHF dont l'enveloppe aurait les caractéristiques qui viennent d'être mentionnées.

Au cours de la mesure, on peut enregistrer les caractéristiques $\varepsilon_r$ et $\sigma$ du sol.

On observe donc la forme des champs au voisinage du sol par rapport aux champs incidents et/ou de la tension/courant dans le simulateur. L'étude théorique exposée plus haut montre que si le sol est homogène, on aura:

– une valeur crête du champ total dans le rapport

$$\frac{E_{tangentiel}}{E_{incident}} = \frac{2}{\sqrt{\varepsilon_r + 1}}$$ avec le champ incident.

– une décroissance à long terme caractéristique de la conductivité

– une limite de cette décroissance à une valeur constante, fonction de la qualité de contact de terre des électrodes du simulateur dans le sol.

Si $Z_c$ est l'impédance du simulateur, le niveau résiduel de champ électrique tangentiel à long terme devrait être de l'ordre de:

$$\frac{E_{résiduel}}{E_i} = \frac{2R}{Z_c + R}.$$

Le cornet du simulateur, essentiellement constitué de conducteurs réunis, d'une part, après regroupement à un connecteur d'entrée 5 relié à un adaptateur 8 et un générateur 9 et, d'autre part, à des électrodes 6, 7 enfouies, peut être de type vertical ou oblique d'angle $\psi$.

De plus, le demi-angle au sommet $\theta$ conditionne l'adaptation du cornet comme cela sera démontré dans la suite du présent texte.

Si le demi-angle au sommet $\theta$ de la ligne est faible, et si les pieux 7 sont par exemple suffisamment longs, les conditions de propagation d'une onde I.E.M. dans la ligne, en direction du sol sont rigoureusement identiques à celles que rencontrerait une onde en espace libre, venant frapper le sol sous incidence normale: l'effet de l'onde incidente est seulement limité à la section de la ligne réalisée.

Si on appelle $\psi$ l'angle d'incidence, $\varepsilon_r$ et $\sigma$ les caractéristiques diélectriques et conductrices du sol, on montre sans difficultés que le coefficient de réflexion d'un milieu homogène infini séparé de l'air par un plan est:

en polarisation horizontale:

$$R_h = \frac{\sin \psi - \sqrt{\varepsilon_r (1 - j \frac{\sigma}{\omega \cdot \varepsilon_o \cdot \varepsilon_r}) - \cos^2 \psi}}{\sin \psi + \sqrt{\varepsilon_r (1 - j \frac{\sigma}{\omega \cdot \varepsilon_o \cdot \varepsilon_r}) - \cos^2 \psi}},$$

et en polarisation verticale:

$$R_v = \frac{\varepsilon_r (1 - j \frac{\sigma}{\omega \cdot \varepsilon_o \cdot \varepsilon_r}) \sin \psi - \sqrt{\varepsilon_r (1 - j \frac{\sigma}{\omega \cdot \varepsilon_o \cdot \varepsilon_r}) - \cos^2 \psi}}{\varepsilon_r (1 - j \frac{\sigma}{\omega \cdot \varepsilon_o \cdot \varepsilon_r}) \sin \psi + \sqrt{\varepsilon_r (1 - j \frac{\sigma}{\omega \cdot \varepsilon_o \cdot \varepsilon_r}) - \cos^2 \psi}}$$

En incidence normale:

$$\psi = 90°C$$

$$R_v = R_h = R$$

$$R = \frac{1 - \sqrt{\varepsilon_r (1 - j \frac{\sigma}{\omega \cdot \varepsilon_o \cdot \varepsilon_r})}}{1 + \sqrt{\varepsilon_r (1 - j \frac{\sigma}{\omega \cdot \varepsilon_o \cdot \varepsilon_r})}}$$

Il apparaît immédiatement que R présente deux cas limites simples:

– en hautes fréquences $(\omega > \frac{\sigma}{\varepsilon_o \cdot \varepsilon_r})$,

$$R \neq \frac{1 - \sqrt{\varepsilon_r}}{1 + \sqrt{\varepsilon_r}},$$

et la réflexion ne dépend que de la constante diélectrique du sol;

– en basses fréquences $(\omega < \frac{\sigma}{\varepsilon_o \cdot \varepsilon_r})$,

$$R \neq 1.$$

et le sol réfléchit totalement le champ incident.

Si le champ incident est constitué par un échelon d'onde plane électrique et magnétique, les propriétés du coefficient de réflexion se traduisent de la manière représentée sur les figures 14A à 14F.

Ainsi, le champ électrique incident $E_i$ de niveau + 1, de la figure 14A, et le champ électrique réfléchi $E_r$ se terminant au niveau – 1 après être passé à un point anguleux $E_a$ de niveau

$$\frac{1 - \sqrt{\varepsilon_r}}{1 + \sqrt{\varepsilon_r}},$$

de la figure 14B, s'ajoutent pour donner le champ électrique total au sol $E_t$ ayant un maximum $E_m$ au niveau

$$\frac{2}{1 + \sqrt{\varepsilon_r}},$$

de la figure 14C.

De même, le champ magnétique incident $H_i$ de niveau + 1, de la figure 14D, et le champ magnétique réfléchi $H_r$ se terminant au niveau + 1 après être passé à un point anguleux $H_a$ de niveau

$$\frac{\sqrt{\varepsilon_r} - 1}{\sqrt{\varepsilon_r} + 1},$$

de la figure 14E, s'ajoutent pour donner le champ magnétique total au sol $H_t$ se terminant au niveau + 2, de la figure 14F.

Une partie enfin du champ incident pénètre dans le sol, où elle est progressivement atténuée en raison de la dissipation de l'énergie dans la partie résistive de l'impédance du sol.

L'atténuation est donc sélective en fonction de la fréquence, et le signal en profondeur est progressivement intégré, les hautes fréquences étant atténuées plus rapidement que les basses fréquences.

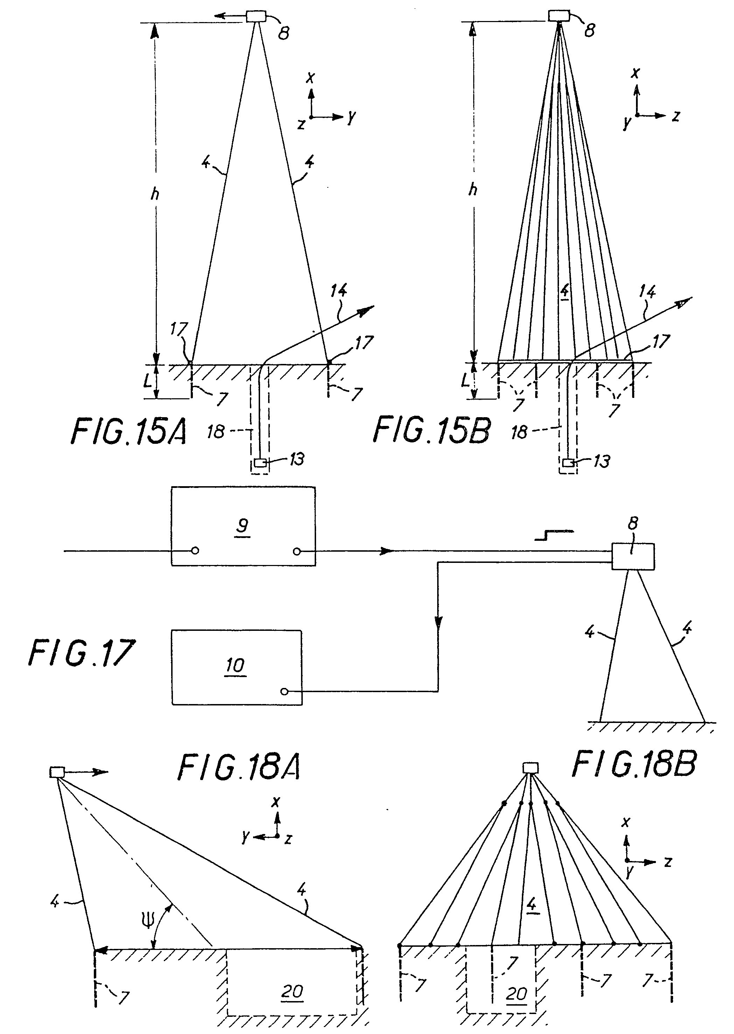

Selon une forme de réalisation de l'invention représentée sur les figures 15A et 15B, le simulateur cornet comporte:

– deux nappes 4 de fils conducteurs reliées à l'adaptateur 8 et aux électrodes sous la forme de pieux 7 sur la figure,
– une zone de sol dégagée sous le simulateur de hauteur h ≃ 10 m,
– de rangées de pieux métalliques verticaux 7 de longueur L ≃ 4 m enfoncés dans le sol selon un maillage qu'on appellera zone d'essais.

Ces pieux peuvent avantageusement être réunis à une tresse conductrice horizontale 17, à laquelle on réunit les nappes de conducteurs constituant l'aérien testé.

Ce simulateur est à axe vertical et le connecteur de liaison auquel aboutissent les nappes est donc sensiblement à l'aplomb du centre du carré de base.

Au centre de la zone d'essais et d'illumination, un puits ou cavité 18 peut permettre d'effectuer grâce au capteur 13 des mesures en profondeur dans le sol.

Les montages de mesure peuvent présenter quelques variantes et bien que le schéma général soit celui de la figure 13, les schémas pratiques des figures 16 et 17 peuvent être utilisés.

Les mesures sont effectuées au moyen de chaînes E ou H comportant, outre le capteur optique 13, un transducteur optoélectronique relié au capteur par un câble à fibres optiques 14, les résultats étant enregistrés, sur un oscilloscope 11 (non représenté sur les figures 16 et 17. On utilise comme générateur un générateur approprié 9 pouvant être à relais à interrupteur à lames souples au mercure, qui, équipé en sortie d'une ligne coaxiale 50 Ω permet de délivrer des impulsions de tension ≤ 500 V sur 50 Ω, avec un front de montée de 1 ms. Le temps de montée de l'ensemble câblages/générateur/capteurs E ou H/ liaison optique/oscilloscope est de 4 ns.

Des mesures de réflectométrie sont effectuées sur les lignes, de deux façons différentes selon qu'elles sont effectuées grâce au montage de la figure 16 ou à celui de la figure 17:

– par rapport à 50 Ω, en mesurant la tension en sortie du générateur 9 avec une sonde 19 d'impédance 1 MΩ attaquant l'oscilloscope 10 par l'intermédiaire d'un câble de liaison;
– par rapport à l'impédance caractéristique du simulateur réalisé, elle-même déterminée dans un premier temps par rapport à 50 Ω.

On insère alors au niveau du connecteur d'entrée du simulateur un adaptateur d'impédance bidirectionnel 8 tel que le générateur voie 50 Ω et que le simulateur (d'impédance caractéristique $Z_c$ ), voie $Z_c$. Cet adaptateur 8 comporte un diviseur 1/10 adapté qui permet d'observer sur l'oscilloscope 10 la fraction correspondante de la tension présente à l'entrée du simulateur, grâce à un câble de liaison.

Selon une autre forme de réalisation de l'invention, représentée sur les figures 18A et 18B où les mêmes repères de référence désignent les mêmes organes que dans les dessins précédents, le simulateur cornet excite avec un angle d'incidence moyen $\psi$ de 45° (inclinaison axiale par rapport au centre du carré) la zone d'essai, dans laquelle une fosse 20 a été creusée afin d'y implanter une maquette métallique, simulant un bâtiment enterré.

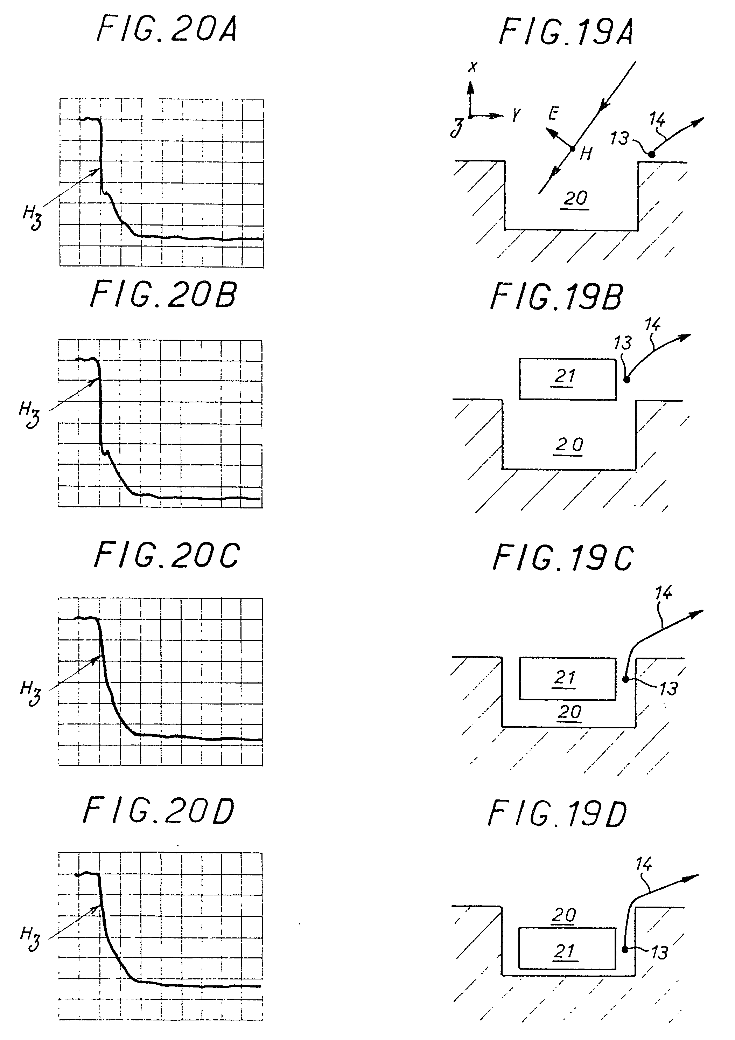

Dans ces conditions, le relevé du champ au sol peut montrer la présence de la composante horizontale de champ électrique $E_y$ et de la composante de champ magnétique $H_z$ selon la figure 19A; seule la composante $H_z$ est représentée sur les figures 20A à 20D.

On observe, au fur et à mesure que l'on se rapproche de la nappe la plus inclinée, une décroissance progressive de l'amplitude du champ électrique tangentiel, dans un rapport voisin de 2. La figure 20A montre la composante $H_z$ au niveau du sol, et les figures 20B à 20D les résultats de mesures effectuées sur une maquette métallique 21 parallélépipédique.

Cette maquette n'a pour rôle que de simuler une hypothétique structure conductrice enterrée, mais ne représente pas un cas réel.

La maquette est testée, dans le simulateur cornet, dans trois positions:

– posée sur le sol, hors de la fosse, l'axe longitudinal étant confondu avec la direction Oy (direction perpendiculaire aux nappes du simulateur), selon la figure 19B,
– dans la fosse, selon la figure 19C,
– dans la fosse, le fond reposant sur le sol, selon la figure 19D.

On a mesuré, grâce à un capteur 13 et au câble de fibres optiques 14:

– le champ magnétique $H_z$ sur le sol, au bord de la fosse (figure 20A),
– le champ magnétique $H_z$ sur la paroi avant de la maquette (figures 20B à 20D), pour une tension appliquée de 150 V (calibration: 300 mV C.C.).

On constate que la maquette est excitée par le champ magnétique selon le mode 1 (courant de surface tournant autour de la direction Oz). Le champ $H_z$ sur la face avant recopie sensiblement le champ excitateur.

En conclusion, des essais résultant des deux formes de réalisation décrites et des considérations théoriques énoncées, il est possible d'approcher, avec une précision acceptable, les phénomènes physiques en surface et à faible profondeur au moyen de structures de simulateurs propageant une onde proche de l'onde plane, à front de montée raide.

Les conditions de réflexion de cette onde sur le sol sont respectées et on engendre ainsi, localement des champs électromagnétiques qui ne sont plus liés par les relations d'une onde plane, mais qui respectent la réalité physique, dans tout le spectre des fréquences utiles (et de plus, on obtient, à l'aide d'une seule impulsion, des investigations à toutes les fréquences de son spectre).

Ces champs se propagent en profondeur dans le sol en s'atténuant, les courants tendant vers une distribution uniforme à long terme.

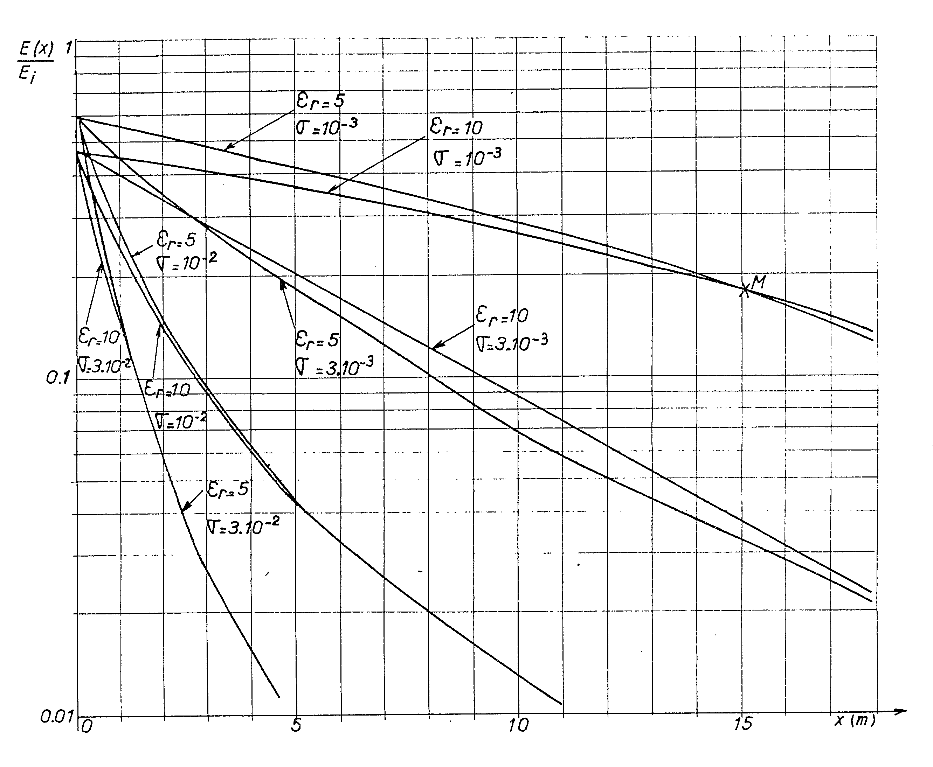

Une telle conception de simulateur est la plus satisfaisante pour l'esprit. A titre indicatif, la figure 21 montre l'amplitude du champ électrique (donc de la densité de courant) transmis dans le sol rapportée à celle du champ incident pour différentes valeurs de la conductivité $\sigma$ et de la constante diélectrique $\varepsilon_r$, et plus particulièrement pour $\sigma = 10^{-3}$; $3.10^{-3}$; $10^{-2}$; $3.10^{-2}$, lorsque $\varepsilon_r = 5$ et lorsque $\varepsilon_r = 10$.

On constate que, pour des valeurs de conductivité faibles, la décroissance est lente

$$(\frac{E}{E_i} = 0,18 \text{ pour } \times = 15 \text{ m si } \sigma = 10^{-3} \text{ mho/m,}$$

correspondant au point M du graphique).

Les courbes de la figure 21 ont été tracées pour un angle d'incindece $\psi$ égale à 90°.

Bien entendu, l'invention n'est pas limitée aux modes et aux formes de réalisation ci-dessus décrits et représentés, et on pourra prevoir d'autres modes et formes de réalisation sans sortir du cadre de l'invention.

**Revendications**

1. Procédé d'illumination d'un sol par rayonnement électromagnétique en vue de la détermination de la constante diélectrique et de la conductivité de ce sol, selon lequel on émet vers la surface du sol, à partir d'un simulateur aérien de type cornet, un rayonnement électromagnétique de caractéristiques déterminées et on détecte en un point du volume illuminé le champ électromagnétique résultant, caractérisé en ce que l'on émet à partir du simulateur aérien (1), maintenu fixe, ledit rayonnement sous la forme d'une impulsion électromagnétique en en relevant (10) une grandeur caractéristique de son amplitude, on guide (4, 6, 7) cette impulsion électromagnétique jusqu'à une profondeur prédéterminée dans le sol, on relève (13, 11) l'évolution au cours du temps, audit point du volume air-sol illuminé, d'une grandeur représentative de l'amplitude du champ électromagnétique local, et on détermine (10, 11) la constante diélectrique et la conductivité du sol par comparaison des grandeurs représentatives des amplitudes de l'impulsion et du champ électromagnétique résultant, compte tenu de la position dudit point de mesure par rapport à la surface du sol.

2. Procédé selon la revendication 1, caractérisé en ce que l'on déduit la constante diélectrique du sol à partir du rapport de l'amplitude maximale du champ électromagnétique résultant à l'amplitude de ladite impulsion électromagnétique, puis on déduit la conductivité du sol par comparaison de l'évolution au cours du temps de l'amplitude du champ électromagnétique résultant à des courbes d'étalonnage pré-établies.

3. Procédé selon la revendication 1 ou la revendication 2, caractérisé en ce que, pour émettre l'impulsion, on envoie au simulateur aérien de type cornet (1), à partir d'un générateur (9), un signal électrique dont la tension constitue ladite grandeur représentative de l'amplitude de l'impulsion.

4. Procédé selon l'une quelconque des revendications 1 à 3, caractérisé en ce que ledit point de la zone complexe sol-air illuminée est choisi dans l'air.

5. Procédé selon l'une quelconque des revendications 1 à 3, caractérisé en ce que ledit point de la zone complexe sol-air illuminée est choisi dans une cavité creusée dans le sol.

6. Procédé selon l'une quelconque des revendications 1 à 5, caractérisé en ce que l'on détecte ladite grandeur représentative du champ électromagnétique audit point prédéterminé au moyen d'un capteur de champ (13) du type capteur optique relié à un câble à fibres optiques (14), et d'un récepteur opto-électronique (15) relié à un appareil de mesure (11) et que l'on synchronise cet appareil grâce à ladite grandeur représentative de l'impulsion (10).

7. Procédé selon l'une quelconque des revendications 1 à 6, caractérisé en ce que la grandeur représentative de l'amplitude du champ électromagnétique local est la composante de champ électrique de ce dernier.

8. Procédé selon l'une quelconque des revendications 1 à 6, caractérisée en ce que la grandeur représentative de l'amplitude du champ électromagnétique local est la composante de champ magnétique de ce dernier.

9. Simulateur aérien pour la mise en œuvre du procédé selon la revendication 1, adapté à la détermination de la constante diélectrique et de la conductivité d'un sol du type comportant une source de rayonnement électromagnétique, un capteur de champ électromagnétique et un dispositif de mesure associé audit capteur, caractérisé en ce qu'il comporte un générateur (9) d'impulsions électriques, un connecteur d'entrée (5) relié audit générateur, une pluralité de nappes conductrices (4) dirigées vers le sol (2) et reliées au connecteur d'entrée en sorte de former un cornet (1), fixe par rapport au sol, pour émettre vers la surface du sol, sous un angle d'incidence donné, des impulsions électromagnétiques, une structure enterrée (6, 7) prolongeant dans le sol lesdites nappes pour guider ces impulsions électromagnétiques jusqu'à une profondeur prédéterminée, le capteur de champ électromagnétique (13) étant adapté à être disposé dans le volume complexe air-sol défini par ces nappes et cette structure enterrée pour relever un signal représentatif de l'amplitude du champ électromagnétique résultant en un point prédéterminé dudit volume complexe air-sol illuminé, et des dispositifs de mesure (10, 11) reliés audit connecteur d'entrée et audit capteur, respectivement.

10. Simulateur aérien selon la revendication 9, caractérisé en ce qu'il comporte deux nappes conductrices (4) formées de fils conducteurs, qui forment un dièdre déterminant au sol un rectangle.

11. Simulateur aérien selon la revendication 9 ou la revendication 10, caractérisé en ce que les nappes (4) déterminent au sol un polygone, et dans lequel le connecteur d'entrée (5) est situé sensiblement à l'aplomb du centre dudit polygone.

12. Simulateur aérien selon la revendication 9 ou la revendication 10, caractérisé en ce que les nappes (4) déterminent au sol un polygone, et dans lequel le connecteur d'entrée (5) définit avec le centre dudit polygone une direction d'émission inclinée par rapport à la surface du sol.

13. Simulateur aérien selon l'une des revendications 9 à 12, caractérisé en ce que les nappes (4) déterminent au sol un polygone et dans lequel la structure enterrée comporte un treillage métallique conducteur (6) s'étendant hors du polygone et à faible profondeur dans ledit sol.

14. Simulateur aérien selon l'une des revendications 9 à 13, caractérisé en ce que la structure enterrée dans le sol comporte des pieux conducteurs (7) à des espacements et à des profondeurs d'enfoncement déterminés.

15. Simulateur aérien selon l'une des revendications 9 à 14, caractérisé en ce que le capteur de champ électromagnétique (13) est disposé sur la surface du sol dans la zone illuminée.

16. Simulateur aérien selon l'une des revendications 9 à 14, caractérisé en ce que le capteur de champ électromagnétique (13) est disposé dans un cavité (18) pratiquée dans le sol dans la zone illuminée.

## Patentansprüche

1. Verfahren zur Bodenbestrahlung mittels elektromagnetischer Strahlung zur Bestimmung der Dielektrizitätskonstante und der Leitfähigkeit dieses Bodens bei dem man von einem Hornantennen-Simulator eine elektromagnetische Strahlung festgelegter Charakteristik auf die Erdoberfläche emittiert und man an einem Punkt des bestrahlten Raumes das resultierende elektromagnetische Feld misst, dadurch gekennzeichnet, dass man von einem Antennensimulator (1), der fest steht, die Strahlung in Form eines elektromagnetischen Impulses abstrahlt, indem man daraus eine charakteristische Grösse ihrer Amplitude entnimmt (10), dass man diesen elektromagnetischen Impuls bis zu einer vorgegebenen Tiefe im Erdboden führt (4, 6, 7), dass man die Entwicklung dieses Punktes des bestrahlten Luft-Boden-Raumes als für die Amplitude des lokalen elektromagnetischen Feldes repräsentative Grösse im Verlauf der Zeit aufnimmt, und dass man die Dielektrizitätskonstante und die Leitfähigkeit des Bodens durch Vergleich der zu den Amplituden des Impulses und des resultierenden elektromagnetischen Feldes repräsentativen Grössen unter Berücksichtigung der Position des Messpunktes im Bezug auf die Erdoberfläche bestimmt (10, 11).

2. Verfahren nach Anspruch 1, dadurch gekennzeichnet, dass man die Dielektrizitätskonstante des Erdbodens ausgehend vom Verhältnis der maximalen Amplitude des resultierenden elektromagnetischen Feldes zur Amplitude des elektromagnetischen Impulses ableitet, und man dann die Leitfähigkeit des Erdbodens durch Vergleich der zeitlichen Entwicklung der Amplitude des resultierenden elektromagnetischen Feldes mit vorher ermittelten Eichkurven ableitet.

3. Verfahren nach Anspruch 1 oder 2, dadurch gekennzeichnet, dass man, um den Impuls auszustrahlen, von einem Generator (9) ein elektrisches Signal, dessen Spannung die für die Amplitude des Impulses repräsentative Grösse darstellt, zum Hornantennen-Simulator (1) schickt.

4. Verfahren nach einem der Ansprüche 1 bis 3, dadurch gekennzeichnet, dass der Punkt der bestrahlten, komplexen Luft-Boden-Zone in der Luft gewählt wird.

5. Verfahren nach einem der Ansprüche 1 bis 3, dadurch gekennzeichnet, dass der Punkt der bestrahlten, komplexen Luft-Boden-Zone in einem in den Erdboden gebohrten Hohlraum gewählt wird.

6. Verfahren nach einem der Ansprüche 1 bis 5, dadurch gekennzeichnet, dass man die für das elektromagnetische Feld repräsentative Grösse mittels eines Feldsensors (13) des Typs optischer Sensor, der mit einem Kabel aus optischen Fasern (14) verbunden ist, und mit einem opto-elektronischen Empfänger (15), der mit einer Messapparatur (11) verbunden ist, aufnimmt und dass man diese Apparatur mittels der für den Impuls (10) repräsentativen Grösse synchronisiert.

7. Verfahren nach einem der Ansprüche 1 bis 6, dadurch gekennzeichnet, dass die für die Amplitude des lokalen elektromagnetischen Feldes repräsentative Grösse die elektrische Feldkomponente dieses letzteren ist.

8. Verfahren nach einem der Ansprüche 1 bis 6, dadurch gekennzeichnet, dass die für die Amplitude des lokalen elektromagnetischen Feldes repräsentative Grösse die magnetische Feldkomponente dieses letzteren ist.

9. Antennensimulator zur Durchführung des Verfahrens nach Anspruch 1, eingerichtet zur Bestimmung der Dielektrizitätskonstante und der Leitfähigkeit eines Bodens in einer Ausführung, die eine Quelle für elektromagnetische Strahlung aufweist, einen Sensor für elektromagnetische Felder und eine dem Sensor zugeordnete Messvorrichtung, dadurch gekennzeichnet, dass er einen Generator (9) für elektrische Impulse aufweist, ein Eingangsverbindungsstück (5), das mit dem Generator verbunden ist, eine Mehrzahl von

21 0 056 768 22

leitenden Hüllen (4), die zum Erdboden (2) gerichtet sind und mit dem Eingangsverbindungsstück derart verbunden sind, dass sie ein Horn (1) bilden, das im Bezug auf den Erdboden feststeht, um auf die Erdoberfläche unter einem gegebenen Einfallswinkel elektromagnetische Impulse abzustrahlen, eine unterirdische Struktur (6, 7), die die Hüllen in den Erdboden verlängert, um diese elektromagnetischen Impulse bis zu einer vorbestimmten Tiefe zu leiten, wobei der Sensor für das elektromagnetische Feld (13) eingerichtet ist, um in dem komplexen Luft-Boden-Raum, der durch die Hüllen und die unterirdische Struktur bestimmt ist, angeordnet wird, um ein Signal aufzunehmen, das für die Amplitude des elektromagnetischen Feldes, das an einem vorgegebenen Punkt des bestrahlten, komplexen Luft-Boden-Raumes auftritt, repräsentativ ist, und Messvorrichtungen (10, 11), die mit dem Eingangsverbindungsstück und bzw. dem Sensor verbunden sind.

10. Antennensimulator nach Anspruch 9, dadurch gekennzeichnet, dass er zwei leitende Hüllen (4) aufweist, die durch leitende Drähte gebildet sind und eine Winkelform bilden, die am Erdboden einen rechten Winkel festlegen.

11. Antennensimulator nach Anspruch 9 oder 10, dadurch gekennzeichnet, dass die Hüllen (4) am Erdboden ein Polygon bestimmen und in dem das Eingangsverbindungsstück (5) im wesentlichen senkrecht über dem Zentrum dieses Polygons angeordnet ist.

12. Antennensimulator nach Anspruch 9 oder 10, dadurch gekennzeichnet, dass die Hüllen (4) am Erdboden ein Polygon bestimmen und in dem das Eingangsverbindungsstück (5) mit der Mitte des Polygons eine im Bezug auf die Erdoberfläche schräge Abstrahlrichtung bestimmt.

13. Antennensimulator nach einem der Ansprüche 9 bis 12, dadurch gekennzeichnet, dass die Hüllen (4) am Erdboden ein Polygon bestimmen und in dem die unterirdische Struktur einen leitenden Drahtzaun (6) aufweist, der sich ausserhalb des Polygons und mit geringer Tiefe im Erdboden erstreckt.

14. Antennensimulator nach einem der Ansprüche 9 bis 13, dadurch gekennzeichnet, dass die unterirdische Struktur im Erdboden leitende Pfähle (7) in vorbestimmten Abständen und in vorbestimmten Einrammtiefen aufweist.

15. Antennensimulator nach einem der Ansprüche 9 bis 14, dadurch gekennzeichnet, dass der Sensor für das elektromagnetische Feld (13) auf der Erdoberfläche in der bestrahlten Zone angeordnet ist.

16. Antennensimulator nach einem der Ansprüche 9 bis 14, dadurch gekennzeichnet, dass der Sensor für das elektromagnetische Feld (13) in einer Vertiefung (18), die in dem Erdboden in der bestrahlten Zone angebracht ist, angeordnet ist.

**Claims**

1. A method of illumination of a ground by electromagnetic radiation for determination of dielectric constant and conductivity of such ground, according to which an electromagnetic radiation of determined characteristics is emitted towards the surface of the ground from an aerial simulator of the horn type, and the resulting electromagnetic field is detected at a point of the illuminated volume, characterized by emitting from the aerial simulator (1), held fixedly, said radiation in form of an electromagnetic pulse while deriving (10) therefrom a value characterizing its amplitude, guiding (4, 6, 7) such electromagnetic pulse down to a predetermined depth in the ground, recording (13, 11) the time variation, at said point of the illuminated air and ground volume, of a value representative of the amplitude of the local electromagnetic field, and determining (10, 11) ground dielectric constant and ground conductivity by comparing the values representative of the amplitudes of the pulse and the resulting electromagnetic field, due account being taken of the position of said measurement point relative to the ground surface.

2. A method according to claim 1, characterized by deducing ground dielectric constant from the ratio of the maximum amplitude of the resulting electromagnetic field to the amplitude of said electromagnetic pulse, then deducing ground conductivity by comparing the time variation of the amplitude of the resulting electromagnetic field with pre-established calibration curves.

3. A method according to claim 1 or claim 2, characterized in that, for emitting the pulse, there is sent to the aerial simulator of the horn type (1), from a generator (9), an electric signal, the voltage of which constitutes said value representative of the pulse amplitude.

4. A method according to any one of claims 1 to 3, characterized in that said point in the complex illuminated ground and air zone is selected in air.

5. A method according to any one of claims 1 to 3, characterized in that said point in the complex illuminated ground and air zone is selected in a cavity dogged in the ground.

6. A method according to any one of claims 1 to 5, characterized by detecting said value representative of the electromagnetic field at said predetermined point by means of a field sensor (13) of the optical sensor type, connected to an optical fiber cable (14), and of an opto-electronic receiver (15) connected to a measurement apparatus (11), and synchronizing such apparatus by said value representative of the pulse (10).

7. A method according to any one of claims 1 to 6, characterized in that the value representative of the amplitude of the local electromagnetic field is the electric field component thereof.

8. A method according to any one of claims 1 to 6, characterized in that the value representative of the amplitude of the local electromagnetic field is the magnetic field component thereof.

9. An aerial simulator for carrying out the method according to claim 1 adapted to the determination of dielectric constant and conductivity of a ground of the type comprising a source of electromagnetic radiation, an electromagnetic field sensor and a measurement device associated with said sensor, characterized in that it comprises an electric pulse generator (9), an input connector (5) corrected to the generator, a plurality of conductive layers (4) directed to the ground (2) and connected to the input connector so as to form a horn (1), stationary relative to the ground, to emit electromagnetic pulses towards the surface of the ground under a given incidence angle, a buried structure (6, 7) prolonging said layers into the ground to guide such electromagnetic pulses down to a predetermined depth, the electromagnetic field sensor (13) being adapted to be disposed in a complex air and ground volume defined by such layers and such buried structure to pick up a signal representative of the amplitude of the resulting electromagnetic field at a predetermined point of said complex illuminated air and ground volume, and measurement devices (10, 11) connected to said input connector and said sensor, respectively.

10. An aerial simulator according to claim 9, characterized in that it comprises two conductive layers (4) formed of conductive wires which form a dihedron determining a rectangle on the ground.

11. An aerial simulator according to claim 9 or claim 10, characterized in that the layers (4) determine a polygon on the ground, and in which the input connector (5) is substantially located in the air plumb with the center of said polygon.

12. An aerial simulator according to claim 9, or claim 10, characterized in that the layers (4) determine a polygon on th ground, and wherein the input connector (5) defines with the center of said polygon a direction of emission inclined relative to the ground surface.

13. An aerial simulator according to one of claims 9 to 12, characterized in that the layers (4) determine a polygon on the ground, and wherein the buried structure comprises a conductive metallic network (6) extending outside of the polygon and at a low depth in said ground.

14. An aerial simulator according to one of claims 9 to 13, characterized in that the buried structure in the ground comprises conductive posts (7) at determined spacings and sinking depths.

15. An aerial simulator according to one of claims 9 to 14, characterized in that the electromagnetic field sensor (13) is disposed on the ground surface in the illuminated zone.

16. An aerial simulator according to one of claims 9 to 14, characterized in that the electromagnetic field sensor (13) is disposed in a cavity (18) formed in the ground in the illuminated zone.

FIG. 1

FIG. 2

FIG. 3

FIG. 4

FIG.5

FIG.6

FIG.7

FIG.8

FIG.9

17

FIG.10

FIG.11

FIG.12

19

FIG.13

FIG 14A    FIG.14B    FIG.14C

FIG.14D    FIG.14E    FIG.14F

FIG.16

0 056 768

FIG.15A

FIG.15B

FIG.17

FIG.18A

FIG.18B

23

# FIG. 20A

# FIG. 20B

# FIG. 20C

# FIG. 20D

# FIG. 19A

# FIG. 19B

# FIG. 19C

# FIG. 19D

25